# EUROPEAN PATENT APPLICATION

(11) **EP 2 110 304 A1**
(43) Date of publication of application: **21.10.2009**
(21) Application number: 08425260.0
(22) Date of filing: 17.04.2008
(51) Int. Cl.: B62M 9/12

(54) **Bicycle derailleur**

(71) Applicant: CAMPAGNOLO S.r.l., 36100 Vicenza (VI) (IT)
(72) Inventor: Dal Pra', Giuseppe, 36010 Zanè (Vicenza) (IT)
(74) Representative: Castiglia, Paolo

(57) **Abstract**

The invention concerns a bicycle derailleur (1), comprising a support member (102) intended to be mounted on a bicycle frame, a displacement member (103) of a bicycle chain and at least one articulation arm (104, 105) to connect in a mobile manner said displacement member (103) to said support member (102). The articulation arm (104) comprises at least one first coupling portion (104a, 104b) rotatably connected, about a respective rotation axis, to a respective second coupling portion (102a) of at least one member (102) between said support member and said displacement member. One (104a, 104b) between said at least one first coupling portion and said second coupling portion comprises opposite first side coupling walls (126, 127) arranged in axially outer position with respect to the other coupling portion (102a). Said first side coupling walls (126, 127) extend from a bottom wall extending, along a longitudinal direction of said at least one articulation arm (104), at least until at said rotation axis, so as, in a cross section taken at said rotation axis, a substantial U-shape is defined.

## Description

The present invention concerns a bicycle derailleur.

The invention also concerns a bicycle comprising the aforementioned derailleur. Preferably, the aforementioned bicycle is a racing bicycle.

As known, the bicycle is a mechanical means moved by muscular driving force that is transmitted to the rear "driving" wheel through a motion transmission system. It comprises a pair of crank arms, on which the cyclist exerts a propulsive thrust, one or more driving toothed wheels, made to rotate by direct coupling with the crank arms, and one or more driven toothed wheels or "sprockets", made to rotate by the driving toothed wheels through a chain, said sprockets being coupled with the hub of the rear wheel.

In particular, the racing bicycles comprise a plurality of sprockets of various diameters and a plurality of driving toothed wheels, also of various diameters. The chain simultaneously engages a driving toothed wheel and a sprocket and can be selectively displaced on them through a front derailleur and a rear derailleur, so as to obtain the combination of driving toothed wheel and sprocket that offers the transmission ratio most favourable to the course conditions.

The front derailleur is mounted on the seat post tube of the bicycle frame near to the plurality of driving toothed wheels and moves the chain from one driving toothed wheel to another. The rear derailleur is mounted on a portion of the bicycle frame near to the plurality of sprockets and moves the chain from one sprocket to another.

In the prior art, front and rear derailleurs are made according to an articulated parallelogram mechanism in which the sides of the parallelogram are articulated in pairs, along respective substantially parallel rotation axes, through pins. In particular, such an articulated parallelogram is formed by a support member, intended to remain fixed with respect to the frame, a displacement member of the chain over the toothed wheels (the cogwheels of the crankset, in the case of front derailleur, or the sprockets of the sprocket assembly, in the case of rear derailleur), and a pair of articulation arms or connecting rods (generally identified as outer connecting rod and inner connecting rod), to connect in a mobile manner the displacement member of the chain to the support member. In the case of front derailleur, the displacement member comprises a so-called cage or "chain guide", whereas in the case of rear derailleur, the displacement member comprises a rocker arm.

Each articulation arm is rotatably connected to the support member and to the chain displacement member through respective articulation pins inserted in respective holes.

EP 1 897 796 describes a rear bicycle derailleur comprising a support member of the derailleur, a chain displacement member and a pair of articulation arms arranged between the support member of the derailleur and the chain displacement member to move the chain displacement member in an articulated manner with respect to the support member of the derailleur. Each articulation arm is rotatably connected to the support member of the derailleur and to the chain displacement member through a respective articulation pin extending along a respective rotation axis. One of the two articulation arms comprises opposite fork-shaped end portions for the coupling with the support member of the derailleur and with the chain displacement member, respectively. In particular, the shape of each end portion is, in a longitudinal section of the articulation arm, substantially forked, with the two side walls of the fork in axially outer positions with respect to a respective end portion of the support member of the derailleur and of the chain displacement member.

The Applicant has found that a derailleur of the type described above has the drawback that, in use, the articulation arm is subject to deformations, above all of bending, at the fork-shaped end portions. This occurs most clearly at the coupling portions of the articulation arm and of the support member of the derailleur when the aforementioned articulation arm is moved through Bowden cable to displace the chain over the sprockets.

The technical problem at the basis of the present invention is to provide a derailleur that is more rigid and strong than the one described above with reference to the prior art.

The present invention therefore concerns, in a first aspect thereof, a bicycle derailleur comprising a support member intended to be mounted on a bicycle frame, a displacement member of a bicycle chain and at least one articulation arm to connect in a mobile manner said displacement member to said support member, said at least one articulation arm comprising at least one first coupling portion rotatably connected, about a respective rotation axis, to a respective second coupling portion of at least one member between said support member and said displacement member, one between said at least one first coupling portion and said second coupling portion having opposite first side coupling walls arranged in axially outer position with respect to the other coupling portion, **characterised in that** said first side coupling walls extend from a bottom wall extending, along a longitudinal direction of said at least one articulation arm, at least until at said rotation axis, so as, in a cross section taken at said rotation axis, a substantial U-shape is defined.

Advantageously, the derailleur of the present invention is more rigid than those of the prior art at the area in which the articulation arm is coupled with the support member and/or with the chain displacement member. Such greater rigidity is given substantially by the presence of greater material at such an area; such greater material is provided through prolongation of the bottom wall of the articulation arm until at the rotation axis.

On the other hand the extension of the bottom wall until at the rotation axis allows, for the same rigidity of the articulation arm, lower thicknesses to be provided compared to those that are adoptable in the derailleurs of the prior art. This means a reduction of the lateral dimensions of the derailleur at the rotation axes and, therefore, a greater flexibility of use.

In a preferred embodiment of the derailleur of the invention, the aforementioned at least one first coupling portion is connected to the aforementioned respective second coupling portion through a respective articulation pin extending along the aforementioned respective rotation axis.

Preferably, the aforementioned bottom wall extends along the aforementioned longitudinal direction until it goes beyond the aforementioned rotation axis. Even more preferably, the bottom wall has, along the aforementioned longitudinal direction, a curved end portion, with centre of curvature on the side of the rotation axis.

Advantageously, in this way not only there is an increase of the structural rigidity of the derailleur at the rotation axis, in particular at the articulation pin, but there is also a protection of the area of the derailleur at such a rotation axis, in particular at the articulation pin, from contaminating agents, like dust and mud, which could compromise the correct movement of the articulation arm during the gearshifting.

Moreover, the presence of the aforementioned contaminating agents causes a worsening of the phenomena of wear to which the components of the articulated parallelogram are subjected due to the relative sliding of the components themselves.

Preferably, the aforementioned bottom wall substantially covers said second coupling portion for a tract of angular width equal to at least 60°. The Applicant has found, in a solution of this type, excellent results in terms of increase of structural strength and protection from the contaminating agents.

In a first preferred embodiment of the derailleur of the present invention, said at least one articulation arm comprises opposite coupling portions having identical shape and dimensions. In this way, the aforementioned advantages are obtained both at the coupling portion of the articulation arm with the support member of the derailleur and at the coupling portion of the articulation arm with the chain displacement member.

In an alternative embodiment of the derailleur of the present invention, said at least one articulation arm comprises an opposite coupling portion being, in a longitudinal section of the articulation arm, substantially fork-shaped, with a pair of second side coupling walls arranged in axially outer position with respect to the respective coupling portion of the other member between said support member and said displacement member.

In this case, preferably, said second side coupling walls have greater thickness than that of said first side coupling walls, so as to achieve the desired structural strength at the aforementioned opposite coupling portion.

Preferably, the derailleur of the present invention comprises two articulation arms, one intended to be arranged beside the bicycle frame and the other intended to be arranged on side opposite the bicycle frame, wherein the articulation arm in which the bottom wall extends at least until at the rotation axis is the one intended to be arranged on side opposite the bicycle frame. Advantageously, the aforementioned advantages are in this way achieved precisely at the articulation arm most stressed during the gearshifting and most exposed to the atmospheric agents.

The aforementioned articulation arm can be made from light metallic material or, alternatively, from composite material preferably consisting of structural fibres incorporated in a matrix of polymeric material. In this way a light derailleur is obtained, which is particularly appreciated above all in the case in which it is provided its use on a racing bicycle.

Preferably, said structural fibres are crossed with an orientation at ±45° with respect to a longitudinal axis of said articulation arm, or with an orientation at 0 and 90° with respect to a longitudinal axis of said articulation arm. Such orientations are particularly advantageous in giving the desired characteristics of structural strength.

In a second aspect thereof, the present invention concerns a bicycle comprising a derailleur of the type described above.

Further characteristics and advantages of the present invention shall become clearer from the following description of some preferred embodiments thereof, made with reference to the attached drawings and given for indicating and not limiting purposes. In such drawings:
- figure 1 schematically represents a perspective view of a rear derailleur according to the present invention;
- figure 2 schematically represents an exploded view of the derailleur of figure 1;
- figure 3 schematically represents a plan view of a detail of the derailleur of figure 1;
- figure 4 schematically represents a section view of the detail of figure 3, taken according to the plane having trace IV - IV of figure 3;
- figures 5 and 6 schematically represent further embodiments of a detail of the derailleur according to the present invention, in respective views analogous to those of figure 3;
- figure 7 schematically represents a perspective view of a further embodiment of a rear derailleur according to the present invention;
- figure 8 schematically represents a plan view of a detail of the derailleur of figure 7;
- figure 9 schematically represents a perspective view of the detail of figure 8.

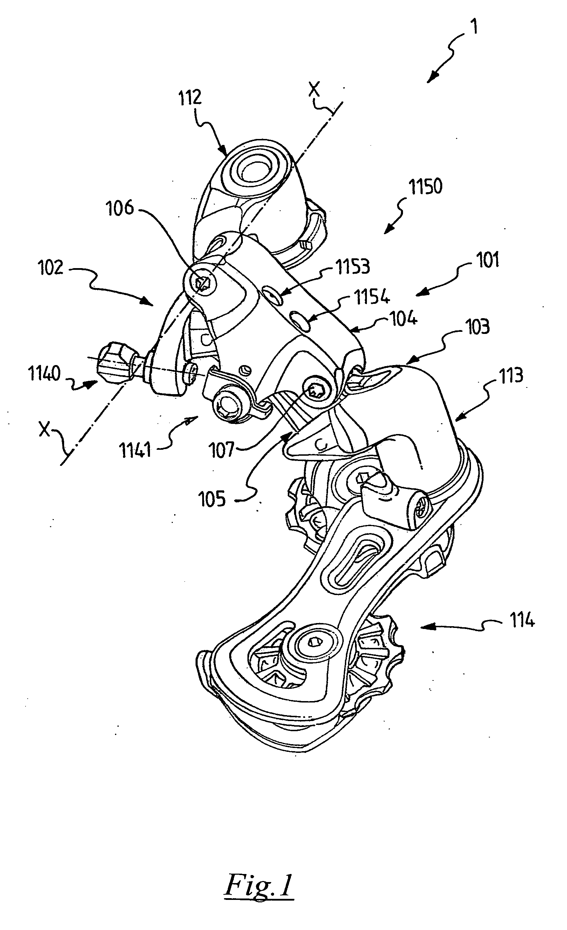

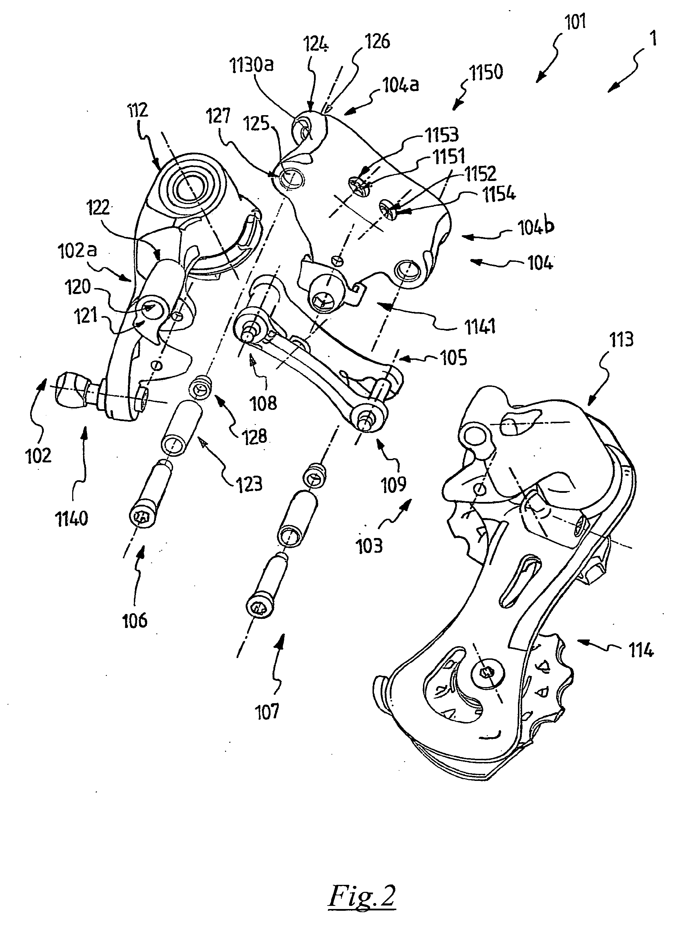

With initial reference to figures 1 and 2, a first embodiment of a bicycle derailleur in accordance with the present invention is shown. Such a derailleur is globally indicated with 1. More specifically, a rear derailleur is shown.

The following description is made with reference to the non-limiting case of the rear derailleur; however, it can, mutatis mutandis, also refer to a front derailleur having analogous articulated parallelogram configuration.

The rear derailleur 1 comprises an articulated quadrilateral driving mechanism 101, more precisely an articulated parallelogram driving mechanism, intended to be moved by a sheathed control cable, or Bowden cable (not shown), which is actuated by the cyclist. Alternatively, the articulated parallelogram could be moved by an actuator with an electric motor.

The mechanism 101 comprises, at the four sides of the parallelogram, four respective connecting rods 102, 103, 104 and 105, which are articulated with one another - about respective rotation axes - by four articulation pins 106, 107, 108 and 109.

The first connecting rod 102 is a support member of the derailleur. Such a connecting rod 102 is intended to be mounted, at a fixing portion 112 thereof, on a bicycle frame.

The second connecting rod 103, opposite the first connecting rod 102, is a displacement member of a bicycle chain. Such a connecting rod 103 comprises a fixing portion 113 to a rocker arm 114 associated to such a displacement member. In the case of front derailleur, the displacement member comprises a so-called cage or "chain guide", in place of the rocker arm 114.

The third connecting rod 104 and the fourth connecting rod 105 are articulation arms to connect in a mobile manner the displacement member of the chain 103 to the support member 102.

The fourth connecting rod 105 is also identified as "inner connecting rod" since it is the one that in use faces the bicycle frame, whereas the third connecting rod 104 is also identified as "outer connecting rod" since it is the one that in use faces the outer environment, i.e. it is arranged on side opposite the bicycle frame.

The first pin 106 connects the first connecting rod 102 and the third connecting rod 104, the second pin 107 connects the second connecting rod 103 and the third connecting rod 104, the third pin 108 connects the first connecting rod 102 and the fourth connecting rod 105 and the fourth pin 109 connects the second connecting rod 103 and the fourth connecting rod 105.

Preferably, the first pin 106 and the second pin 107 are the same as one another, just like the third pin 108 and the fourth pin 109.

As far as the connection of the Bowden cable to the derailleur 1 is concerned, it is of conventional type. In particular, the first connecting rod 102 comprises a portion 1140 for receiving the outer sheath of the Bowden cable, whereas the third connecting rod 104 comprises a connection portion 1141 of the inner cable of the Bowden cable.

The derailleur comprises conventional means of stop adjustment 1150. Such means comprise two screws 1151, 1152 inserted into respective holes 1153, 1154 formed in the third connecting rod 104.

The first connecting rod 102 comprises a coupling portion 102a in which a through hole 120 is formed intended to house the articulation pin 106. The coupling portion 102a is delimited by two axial abutment surfaces 121 and 122, substantially flat and parallel, as well as substantially perpendicular to the rotation axis X-X- of the pin 106.

Inside the through hole 120 of the first connecting rod 102 an annular brass 123 is positioned, integral to the hole 120 and adapted to reduce the frictions during the moving of the articulated parallelogram. In further embodiments of the derailleur of the invention, such a brass could be omitted.

In a further embodiment of the derailleur of the invention, the coupling portion 102a of the first connecting rod 102, instead of having a single through hole 120, as illustrated in figures 1 and 2, could have a fork shape, i.e. comprising a pair of side portions or ears, where respective holes are made that are aligned with each other.

The third connecting rod 104 comprises a coupling portion 104a with the coupling portion 102a of the first connecting rod 102. The coupling portion 104a has opposite side coupling walls 126 and 127 arranged in axially outer position with respect to the coupling portion 102a of the first connecting rod 102.

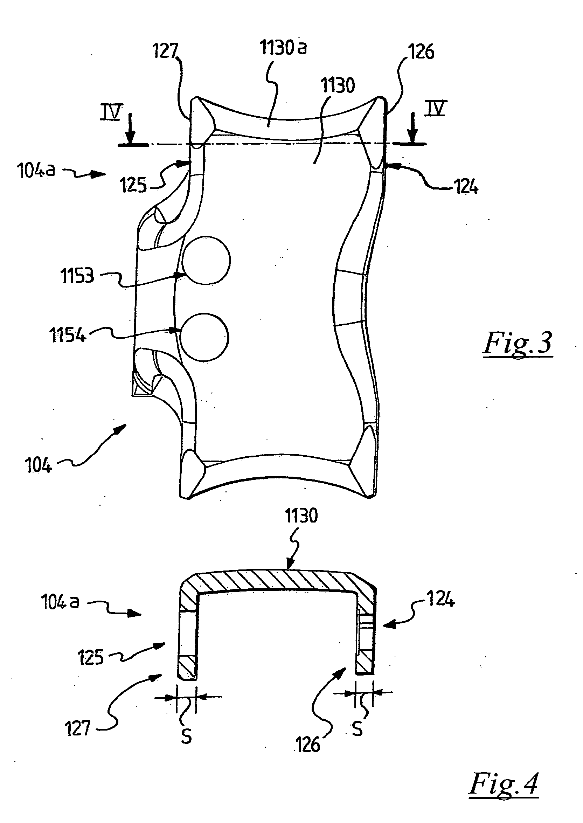

As illustrated in figure 3, the side coupling walls 126 and 127 extend from a bottom wall 1130 in turn extending, along the longitudinal direction of the third connecting rod 104, until it goes beyond the pin 106. In this way, in a cross section passing through the rotation axis X-X of the pin and substantially perpendicular to the longitudinal direction of the third connecting rod 104, the coupling portion 104a has a substantially U shape, as illustrated in figure 4.

In the embodiment illustrated in the attached figures, the bottom wall 1130 extends, along the longitudinal direction of the third connecting rod 104, until it goes beyond the pin 106 and has a curved end portion 1130a, with centre of curvature on the side of the articulation pin 106.

In this way, the bottom wall 1130 of the third connecting rod 104 substantially covers or partially wraps the coupling portion 102a of the first connecting rod 102, and therefore the articulation pin 106. Preferably, the bottom wall 1130 substantially covers or partially wraps the coupling portion 102a for a tract of angular width equal to at least 60°.

The special conformation of the coupling portion 104a of the third connecting rod 104 gives such a coupling portion itself a particular rigidity. The thickness S of the side walls 126 and 127 can be less than that of the corresponding side walls of the coupling portions of the connecting rods of the derailleurs of the prior art, in this way advantageously reducing the lateral dimensions of the derailleur itself at the pin 106.

Moreover, the "wrapping" conformation of the coupling portion 104a of the third connecting rod 104 is such as to protect the articulation pin 106 from contaminating agents, like dust or mud.

In the side walls 126 and 127 of the coupling portion 104a of the third connecting rod 104 respective coaxial through holes 124 and 125 are formed (figure 4).

The opposite coupling portion 104b of the third connecting rod 104, which is pivoted to the second connecting rod 103 through the articulation pin 107, is shaped and sized in an analogous way to the coupling portion 104a.

In the hole 124 a metallic insert 128 is positioned, for example made from aluminium alloy or steel.

The use of such a metallic insert 128 is particularly advantageous in the embodiments in which the third connecting rod 104 is made from composite material.

By composite material it is meant a material consisting of at least two components including a polymeric matrix and a filler for example comprising structural fibres, granules or powders. The structural fibres are preferably selected from the group consisting of carbon fibres, glass fibres, aramid fibres, ceramic fibres, boron fibres and combinations thereof. Carbon fibres are particularly preferred. Preferably, the polymeric material is thermosetting and preferably comprises an epoxy resin. However, this does not rule out the possibility of using a thermoplastic material.

In alternative embodiments of the derailleur of the present invention, the connecting rod 104 is made from metal. In this case the metallic insert 128 could be omitted.

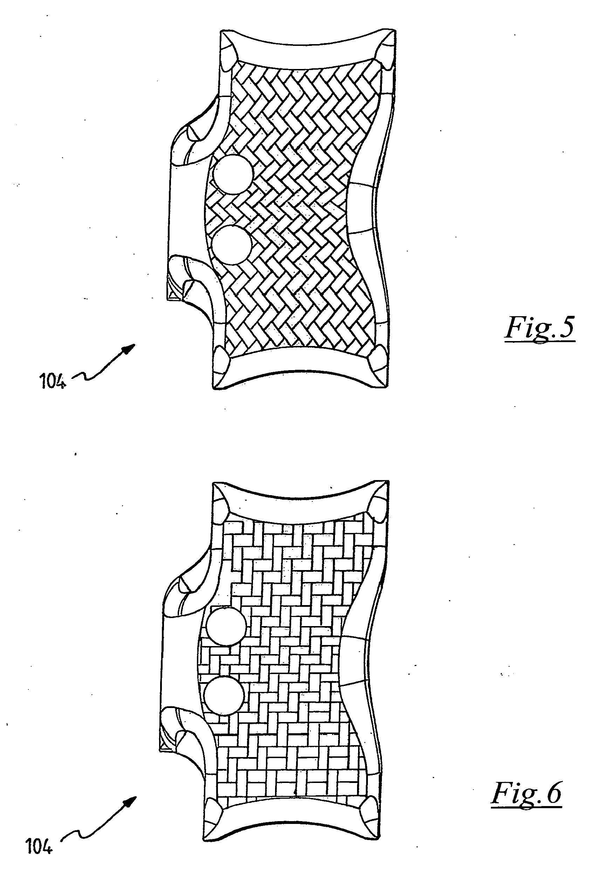

Figure 5 schematically shows an embodiment of the third connecting rod 104 in which it is made from composite material consisting of a fabric of structural fibres (for example carbon fibres) incorporated in a matrix of polymeric material (epoxy resin). The structural fibres (which involve all the body of the third connecting rod itself) are crossed according to angles substantially at 45° with respect to the longitudinal extension of the third connecting rod itself (orientation of 45° positive for the weft, and orientation of 45° negative for the warp).

In a further embodiment of the third connecting rod 104 of the derailleur according to the invention, shown in figure 6, the fibres of the weft and of the warp are orientated according to 0° and 90° with respect to the longitudinal extension of the third connecting rod 104.

The metallic insert 128 is housed in the hole 124 of the third connecting rod 104 and is locked there, for example through gluing or mechanical interference or with other equivalent locking means.

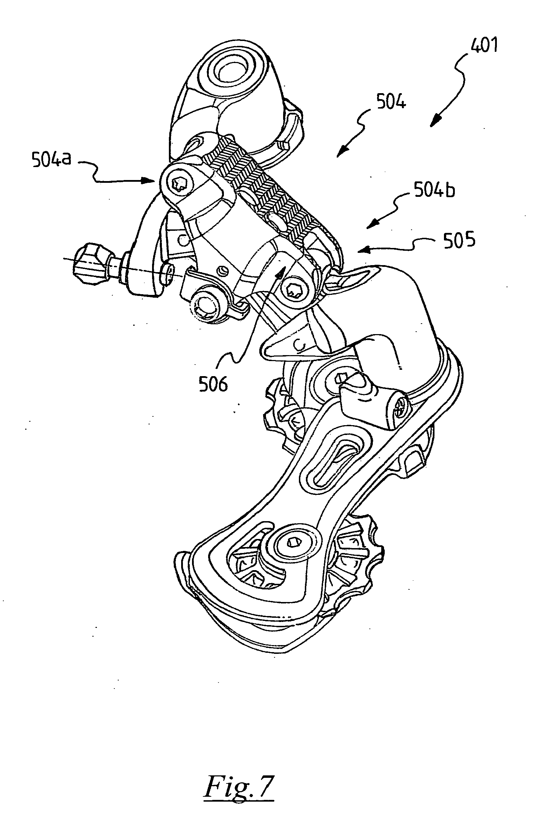

Figures 7-9 show a further embodiment of the derailleur of the invention. In such figures, to structural elements that are identical or equivalent from the functional point of view to those of the derailleur 1 described above with reference to figures 1-4 the same reference numerals increased by 400 shall be attributed and they shall not be described any further.

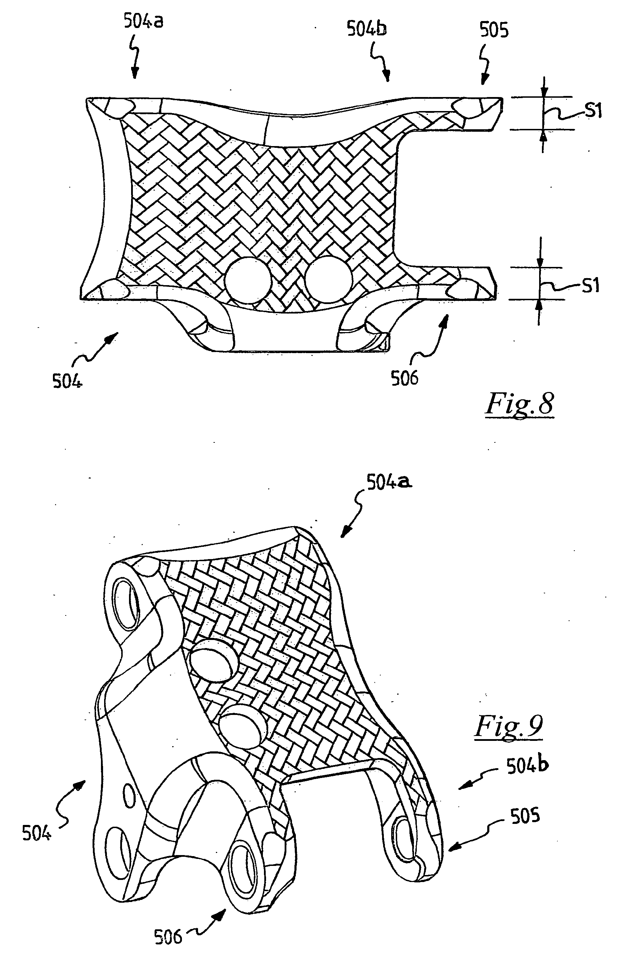

In particular, this third embodiment of the derailleur of the invention, now indicated with 401, differs from the first embodiment of the derailleur 1 in that the third outer connecting rod 504 has, near to its second coupling portion 504b, a shape of conventional type, with second side walls 505 and 506, that, in a longitudinal section of the connecting rod 504, define a substantial fork-shape. The side walls 505 and 506 have a thickness S1 (figure 8) that is greater than the thickness S of the side walls of the corresponding coupling portion of the derailleur 1 of figure 1.

Although the invention has been described and illustrated with reference just to the articulations between the first connecting rod 102 and the third connecting rod 104, and between the third connecting rod 104 and the second connecting rod 103, it can be applied to the articulations between the first connecting rod 102 and the fourth connecting rod 105, and between the fourth connecting rod 105 and the second connecting rod 103.

Of course, a man skilled in the art can bring numerous modifications and variants to the bicycle derailleur described above, in order to satisfy specific and contingent requirements, all of which are in any case covered by the scope of protection of the present invention as defined by the following claims.

## Claims

1. Bicycle derailleur (1, 401), comprising a support member (102) intended to be mounted on a bicycle frame, a displacement member (103) of a bicycle chain and at least one articulation arm (104, 105, 504) to connect in a mobile manner said displacement member (103) to said support member (120), said at least one articulation arm (104, 105, 504) comprising at least one first coupling portion (102a) rotatably connected, about a respective rotation axis (X), to a respective second coupling portion (104a, 104b, 504a, 504b) of at least one member between said support member (102) and said displacement member (103), one between said at least one first coupling portion (102a) and said second coupling portion (104a, 104b, 504a, 504b) having opposite first side coupling walls (126, 127) arranged in axially outer position with respect to the other coupling portion, **characterised in that** said first side coupling walls (126, 127) extend from a bottom wall (1130) extending, along a longitudinal direction of said at least one articulation arm (104, 105, 504), at least until at said rotation axis (X), so as, in a cross section taken at said rotation axis (X), a substantial U-shape is defined.

2. Derailleur (1, 401) according to claim 1, wherein said at least one first coupling portion (102a) is connected to said respective second coupling portion (104a, 104b, 504a, 504b) through a respective articulation pin (106, 107) extending along said respective rotation axis (X).

3. Derailleur (1, 401) according to claim 1 or 2, wherein said bottom wall (1130) extends along said longitudinal direction until it goes beyond said rotation axis (X).

4. Derailleur (1, 401) according to any one of the previous claims, wherein said bottom wall (1130) has, along said longitudinal direction, a curved end portion (1130a), with centre of curvature on the side of said rotation axis (X).

5. Derailleur (1, 401) according to any one of the previous claims, wherein said bottom wall (1130) substantially covers said second coupling portion (104a, 104b, 504a) for a tract of angular width equal to at least 60°.

6. Derailleur (1) according to any one of the previous claims, wherein said at least one articulation arm (104) comprises opposite coupling portions (104a, 104b) having identical shape and dimensions.

7. Derailleur (401) according to any one of claims 1 to 5, wherein said at least one articulation arm (504) comprises an opposite coupling portion (504b) being, in a longitudinal section of the articulation arm, substantially fork-shaped, with a pair of second side coupling walls (505, 506) arranged in axially outer position with respect to the respective coupling portion of the other member between said support member and said displacement member.

8. Derailleur (401) according to claim 7, wherein said second side coupling walls (505, 506) have greater thickness (S1) than that of said first side coupling walls (126, 127).

9. Derailleur (1, 401) according to any one of the previous claims, comprising two articulation arms (104, 105, 504), one intended to be arranged beside the bicycle frame and the other intended to be arranged on side opposite the bicycle frame, wherein said at least one articulation arm (104, 504) is the one intended to be arranged on side opposite the bicycle frame.

10. Derailleur (1, 401) according to any one of the previous claims, wherein said at least one articulation arm (104, 105, 504) is made from light metallic material.

11. Derailleur (1, 401) according to any one of claims 1 to 9, wherein said at least one articulation arm (104, 105, 504) is made from composite material consisting of structural fibres incorporated in a matrix of polymeric material.

12. Derailleur (1, 401) according to claim 11, wherein said structural fibres are crossed with an orientation at ±45° with respect to a longitudinal axis of said articulation arm (104, 105, 504).

13. Derailleur (1, 401) according to claim 11, wherein said structural fibres are crossed with an orientation at 0 and 90° with respect to a longitudinal axis of said articulation arm (104, 105, 504).

14. Bicycle comprising a derailleur (1, 401) according to any one of the previous claims.
